# EUROPÄISCHE PATENTSCHRIFT

(11) **EP 2 947 217 B1**
(45) Veröffentlichungstag und Bekanntmachung des Hinweises auf die Patenterteilung: **02.05.2018**
(21) Anmeldenummer: 15168349.7
(22) Anmeldetag: 20.05.2015
(51) Int. Cl.: E04B 7/02, E04B 7/10, E04D 13/03, E04D 13/035, F24F 13/18, E06B 7/02, E06B 7/10, E06B 3/263, E06B 3/30, E06B 7/14

(54) **DÄMMBLOCK FÜR EIN FENSTER ODER DERGLEICHEN**
INSULATION BLOCK FOR A WINDOW OR THE LIKE
BLOC D'ISOLATION POUR UNE FENÊTRE OU ANALOGUE

(30) Priorität: 22.05.2014 DE 102014007842
(43) Veröffentlichungstag der Anmeldung: 25.11.2015
(73) Patentinhaber: Roto Frank AG, 70771 Leinfelden-Echterdingen (DE)
(72) Erfinder: Möslang, Daniel, 97271 Kleinrinderfeld (DE)
(74) Vertreter: Dietz, Christopher Friedrich

(56) Entgegenhaltungen:
- EP-A1- 2 107 204
- EP-A2- 2 615 236
- WO-A1-99/51832
- DE-A1- 3 200 114
- DE-U1- 29 719 751
- GB-A- 2 301 664

## Beschreibung

Die Erfindung betrifft einen Dämmblock zur dämmenden Anordnung in einem Falzbereich zwischen einem Blendrahmen und einem Flügelrahmen eines Fensters, einer Tür oder dergleichen, insbesondere eines Wohndachfensters.

Derartige Dämmblöcke sind bekannt. WO 99/51832 A1 offenbart einen derartigen Dämmblock. Sie bestehen aus einem dämmenden Material, insbesondere um eine Wärmedämmung und/oder eine Schalldämmung zu realisieren. Je nach Konstruktion eines Fensters, insbesondere Wohndachfensters, bei dem der Dämmblock eingesetzt wird, ergeben sich unterschiedliche Dämmblocklängen und/oder Konturen, um möglichst eine spaltfreie Dämmung zwischen einem Blendrahmen und einem Flügelrahmen des Fensters, insbesondere Wohndachfensters, zu schaffen. Auch bei ein und derselben Fensterkonstruktion ist eine Fertigung der zugehörigen Dämmblöcke relativ aufwendig, da jede Fenstergröße eine darauf abgestimmte Fertigungsvorrichtung zur Herstellung des zugehörigen Dämmblocks erfordert. Besteht der Dämmblock aus geschäumtem Kunststoff, so wird für jede Fenstergröße eine passende Schäumform benötigt.

Der Erfindung liegt die Aufgabe zugrunde, ein Dämmblock der eingangs genannten Art anzugeben, der einfach und kostengünstig herstellbar ist und vielseitig eingesetzt werden kann.

Diese Aufgabe wird durch einen Dämmblock nach Anspruch 1 gelöst, welcher aus mindestens zwei, jeweils über seine Länge verlaufenden Dämmblockteilen zusammengesetzt ist und mindestens einen, durch jeweils mindestens eine

Ausnehmung in jedem der Dämmblockteile gebildeten Luftführungsweg aufweist. Die Zusammensetzung des Dämmblocks aus mindestens zwei Dämmblockteilen, die sich beide über seine gesamte Länge oder im Wesentlichen über seine gesamte Länge erstrecken, ermöglicht die Verwendung von Standarddämmblockelementen, die keine individuellen und aufwendigen Herstellungsvorrichtungen, wie individuelle Formen, erfordern. Vielmehr lassen sich standardisierte Dämmblockteile erfindungsgemäß zusammensetzen, um auf diese Art und Weise insbesondere Hinterschneidungen und dergleichen zu realisieren, die ohne Einsatz der Erfindung, also bei einem einstückigen Dämmblock, sehr aufwendige, mit Schiebern oder dergleichen versehene Formen erfordern, um derartige Blöcke herstellen zu können. Der Einsatzbereich des erfindungsgemäßen Dämmblocks ist durch den mindestens einen Luftführungsweg erweitert, da der erfindungsgemäße Dämmblock einerseits die dämmende Wirkung entfaltet, andererseits jedoch auch die Funktion einer Luftführung übernimmt. Ein mit dem erfindungsgemäßen Dämmblock versehenes Fenster oder dergleichen muss daher für eine Lüftungsfunktion nicht geöffnet werden, sondern es kann der den Dämmblock durchsetzende Luftführungsweg für diese Lüftungsfunktion verwendet werden. Vorzugsweise sind am Fenster Mittel vorhanden, um den Luftführungsweg öffnen und schließen zu können, sodass die Lüftungsfunktion nur bei Bedarf erfolgt. Die Fertigung des erfindungsgemäßen Dämmblocks ist auch in Bezug auf den Luftführungsweg vereinfacht, da jedes Dämmblockteil mindestens eine Ausnehmung aufweist, um den Luftführungsweg zu bilden. Die Ausnehmungen der beiden Dämmblockteile können derart gewählt werden, dass geradlinige oder auch winkelförmige Luftführungswege auf einfache Art und Weise entstehen.

Nach einer Weiterbildung der Erfindung ist vorgesehen, dass jedes der Dämmblockteile ein von mindestens einem Endlosprofil der Länge nach abgelängtes Dämmblockstück ist. Die standardisierten Endlosprofile können demzufolge für jede Fenstergröße verwendet werden, da es zur Herstellung des Dämmblocks lediglich erforderlich ist, mindestens zwei Dämmblockteile auf entsprechende Länge von dem Endlosprofil oder von Endlosprofilen abzulängen und anschließend die Dämmblockteile zum Dämmblock zusammenzusetzen.

Nach der Erfindung ist vorgesehen, dass jedes Dämmblockteil mindestens einen Längsseitenrand aufweist und dass die Ausnehmung jedes Dämmblockteils eine längsseitenrandoffene Ausnehmung ist. Insbesondere ist vorgesehen, dass die jeweilige Ausnehmung die Dicke jedes Dämmblockteils ganz durchsetzt. Die Ausnehmung wird demzufolge an dem gewählten Längsseitenrand hergestellt. Wenn die Ausnehmung die gesamte Dicke des Dämmblockteils durchsetzt, kann dies insbesondere durch einfaches Stanzen, Sägen oder dergleichen erfolgen.

Eine Weiterbildung der Erfindung sieht vor, dass die Ausnehmungen der beiden Dämmblockteile zumindest teilweise ineinander übergehen. Um den Luftführungsweg zu schaffen, insbesondere winkelförmig zu gestalten, werden die Ausnehmungen derart bei den beiden Dämmblockteilen positioniert, dass sie beim Zusammensetzen der beiden Dämmblockteile ineinander münden, also beide Ausnehmungen bei der Schaffung des einen Luftführungswegs beitragen. Dabei ist es nicht erforderlich, dass die Ausnehmungen deckungsgleich aufeinanderliegen, sondern sie können sich auch nur teilweise überlappen.

Nach der Erfindung ist vorgesehen, dass jedes Dämmblockteil zwei einander gegenüberliegende Längsseitenränder aufweist und dass die Ausnehmung des einen Dämmblockteils zu einem seiner Längsseitenränder und die Ausnehmung des anderen Dämmblockteils zu dem seiner Längsseitenränder randoffen ist, der entgegengesetzt zum genannten Längsseitenrand des einen Dämmblockteils liegt. Die beiden Ausnehmungen der beiden Dämmblockteile liegen demzufolge an entgegengesetzten Längsseitenrändern der zugehörigen Dämmblockteile. Hierdurch lässt sich ein winkelförmiger Verlauf des Luftführungswegs auf einfache Art und Weise erzielen.

Nach einer Weiterbildung der Erfindung ist vorgesehen, dass die Dämmblockteile jeweils aus Kunststoff, insbesondere Schaumstoff, bestehen. Bevorzugt können die Dämmblockteile aus Polyethylen-Schaumstoff (PE-Schaumstoff) bestehen.

Die erwähnten Endlosprofile bestehen bevorzugt aus dem genannten Kunststoff-Schaumstoff, insbesondere PE-Schaumstoff, wobei es möglich ist, sie im Strangpressverfahren zu erstellen, also stranggepresste Schaumstoffendlosprofile, die abgelängt werden.

Nach einer Weiterbildung der Erfindung ist vorgesehen, dass jede der Ausnehmungen eine durch Stanzen, Schneiden, Sägen und/oder thermischen Austrag gebildete Ausnehmung ist. Alles sind sehr einfache Bearbeitungsmaßnahmen, um die jeweilige Ausnehmung zu realisieren.

Ferner ist es vorteilhaft, wenn jedes Dämmblockteil eine Oberseite und eine Unterseite aufweist und dass auf der Oberseite des einen Dämmblockteils die Unterseite des anderen Dämmblockteils befestigt ist. Dieses Befestigen bewirkt die Zusammensetzung der beiden Dämmblockteile zum Dämmblock. Selbstverständlich können auch mehr als zwei Dämmblockteile entsprechend aneinander befestigt werden. Die Befestigung erfolgt vorzugsweise durch Stoffschluss (insbesondere Schweißen), durch Clipsgeometrie (entsprechende Konturen des einen Dämmblockteils clipsen in entsprechende Konturen des anderen Dämmblockteils) und/oder durch Klebung.

Eine Weiterbildung der Erfindung sieht vor, dass der Luftführungsweg ein Luftführungswinkelweg ist. Der Winkel des Luftführungswegs kann beliebige Werte annehmen, er beträgt vorzugsweise 90°.

Die Erfindung betrifft ferner ein Fenster, eine Tür oder dergleichen, insbesondere ein Wohndachfenster, mit einem Blendrahmen und einem Flügelrahmen, zwischen denen ein Falzbereich ausgebildet ist, dadurch gekennzeichnet, dass in dem Falzbereich ein Dämmblock - nach einer der vorstehend erwähnten Ausgestaltungen - angeordnet ist.

Die Zeichnungen veranschaulichen die Erfindung anhand eines Ausführungsbeispiels, und zwar zeigt:
- Figur 1: eine Draufsicht auf ein Wohndachfenster,
- Figur 2: einen schematischen Querschnitt durch das Wohndachfenster im Bereich eines oberen Blendrahmenholms und eines oberen Flügelrahmenholms entlang der Linie B-B in Figur 1,
- Figur 3: ein Dämmblockteil eines Dämmblocks des Wohndachfensters,
- Figur 4: ein weiteres Dämmblockteil,
- Figur 5: der Dämmblock, zusammengesetzt aus den Dämmblockteilen der Figuren 3 und 4 in perspektivischer Ansicht, und
- Figur 6: eine der Figur 5 entsprechende Darstellung mit Andeutung eines Bereichs des Blendrahmens des Wohndachfensters.

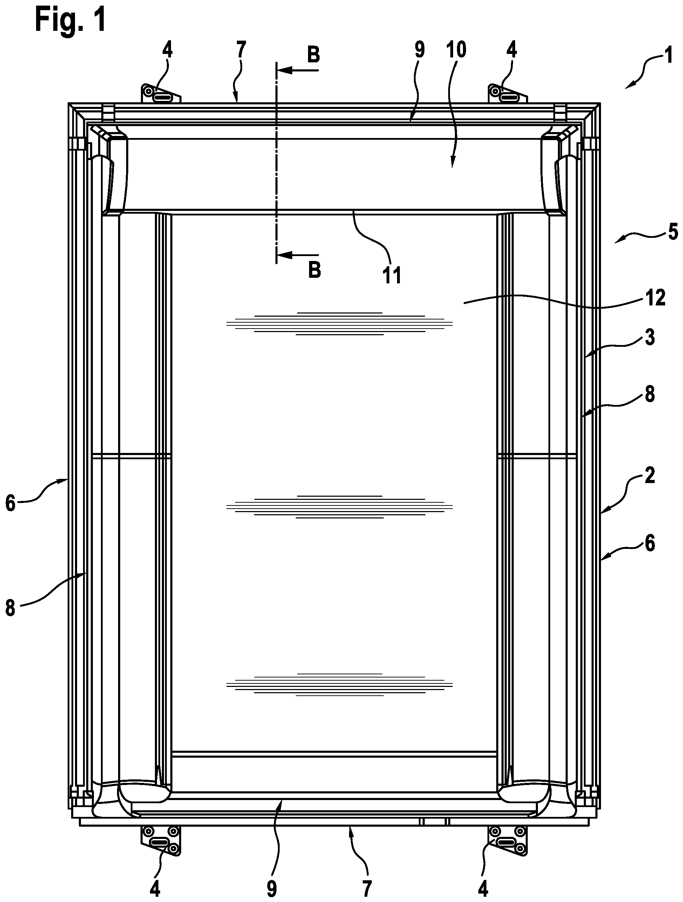

Die Figur 1 zeigt ein Wohndachfenster 1, das einen Blendrahmen 2 und einen Flügelrahmen 3 aufweist. Am Blendrahmen 2 sind Befestigungslaschen 4 angeordnet, mit deren Hilfe eine Befestigung beispielsweise an einem Schrägdach eines Wohnhauses erfolgt. Der Blendrahmen 2 und auch der Flügelrahmen 3 sind mit einer Beblechung 5 versehen, die mehrteilig ausgebildet ist und unter anderem als Wetterschutz dient. Der Blendrahmen 2 weist zwei einander gegenüberliegende Blendrahmenseitenholme 6 sowie zwei einander gegenüberliegende Blendrahmenquerholme 7 auf. Der Flügelrahmen 3 weist zwei einander gegenüberliegende Flügelrahmenseitenholme 8 sowie zwei einander gegenüberliegende Flügelrahmenquerholme 9 auf. Der obere Flügelrahmenquerholm 9 und - zumindest teilweise - auch der obere Blendrahmenquerholm 7 werden von einem haubenartigen Abdeckblech 10 überfangen, das der Beblechung 5 angehört und sich mit einer Endkante 11 bis über eine Verglasung 12 des Flügelrahmens 3 erstreckt.

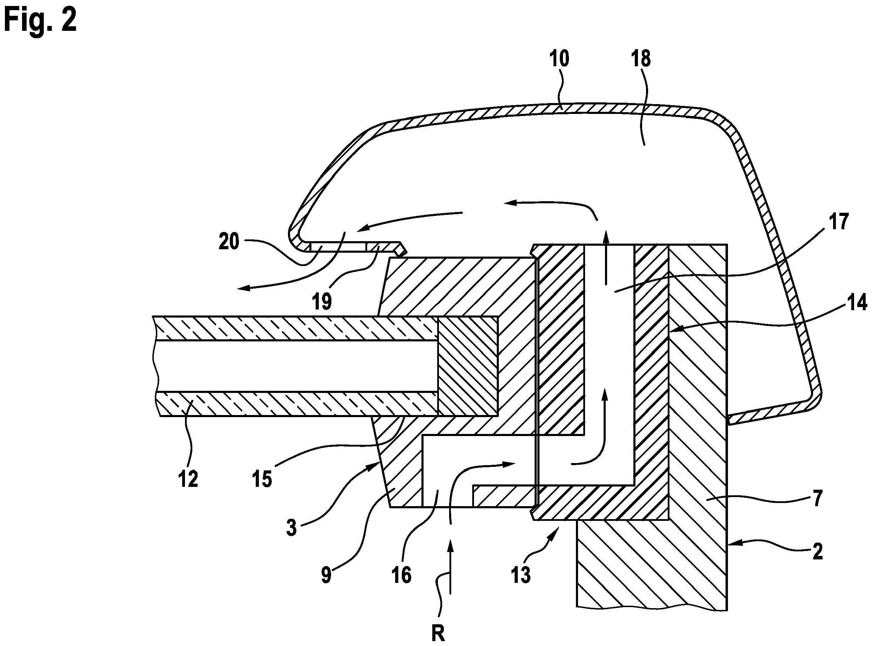

Die Figur 2 zeigt einen Querschnitt durch den oberen Bereich des Wohndachfensters 1 entlang der Linie B-B in Figur 1, wobei es sich bei der in Figur 2 lediglich um eine schematische Darstellung handelt, also keine genaue Wiedergabe der tatsächlichen Konstruktion.

Es ist in der Figur 2 erkennbar, dass zwischen den Blendrahmen 2 und dem Flügelrahmen 3 ein Falzbereich 13 ausgebildet ist, der von einem Dämmblock 14 im Wesentlichen ausgefüllt wird. Der Dämmblock 14 besteht aus dämmendem, elastisch nachgiebigem Material, um eine Wärmedämmung und/oder eine Schalldämmung vorzunehmen. In der Figur 2 ist vom Blendrahmen 2 der obere Blendrahmenquerholm 7 und vom Flügelrahmen 3 der obere Flügelrahmenquerholm 9 dargestellt. Die erwähnte Verglasung 12 des Flügelrahmens 3 ist in einer Aufnahmenut 15 des Blendrahmens 3 gehalten. Ferner weist der Flügelrahmen 3 mindestens einen Luftkanal 16 auf, der zu mindestens einen kanalartigen Luftführungsweg 17 im Dämmblock 14 führt, das heißt, der Luftkanal 16 kommuniziert lufttechnisch mit dem Luftführungsweg 17. Der Luftkanal 16 mündet - bei eingebautem Wohndachfenster - in einen Wohnraum. Der Luftführungsweg 17 mündet in einen Hohlraum 18, der unterhalb des haubenartigen Abdeckblechs 10 ausgebildet ist. In einem die Verglasung 12 überragenden Bereich 19 des Abdeckblechs 10 befindet sich mindestens eine Luftaustrittsöffnung 20, sodass beispielsweise Raumluft R aus dem Wohnraum in den Luftkanal 16 eintreten kann, von dort aus in den Luftführungsweg 17 bis in den Hohlraum 18 gelangt und dort aus der Luftaustrittsöffnung 20 nach außen, also in die Außenatmosphäre ausströmen kann. Selbstverständlich ist auch eine umgekehrte Luftströmung denkbar, also von der Außenatmosphäre in den Wohnraum. Dies führt zu dessen Belüftung mit Frischluft. Mittels geeigneter, vorzugsweise an der Innenseite des Flügelrahmens 3 angeordneter Querschnittsverstellmittel ist es möglich, die erläuterte Luftführung zu öffnen und zu schließen und gegebenenfalls auch Zwischenstellungen zuzulassen. Einzelheiten hierzu sollen nicht dargestellt werden, da sie grundsätzlich bekannt sind.

Nachstehend wird näher auf den Dämmblock 14 eingegangen, insbesondere auf seinen Aufbau und auf die Ausbildung seines Luftführungswegs 17.

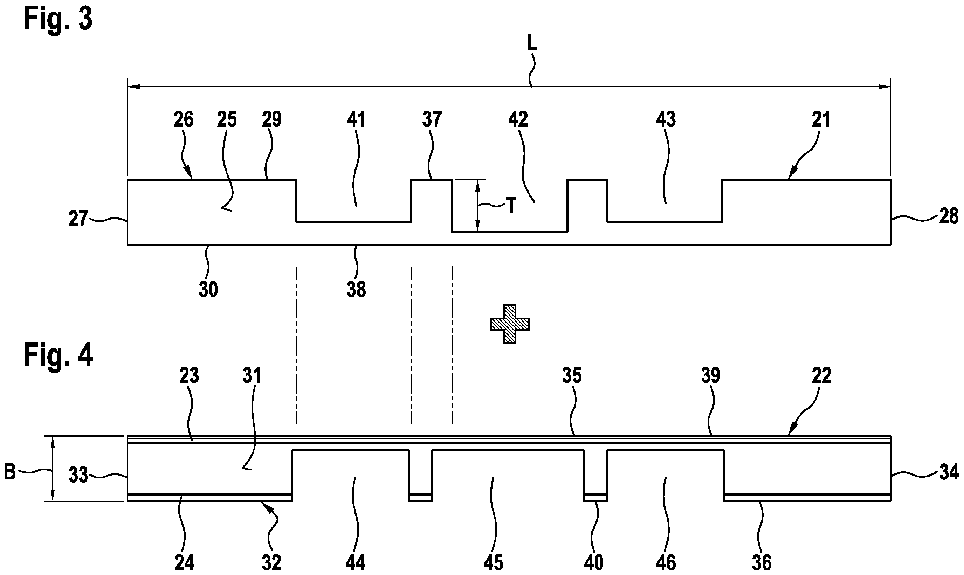

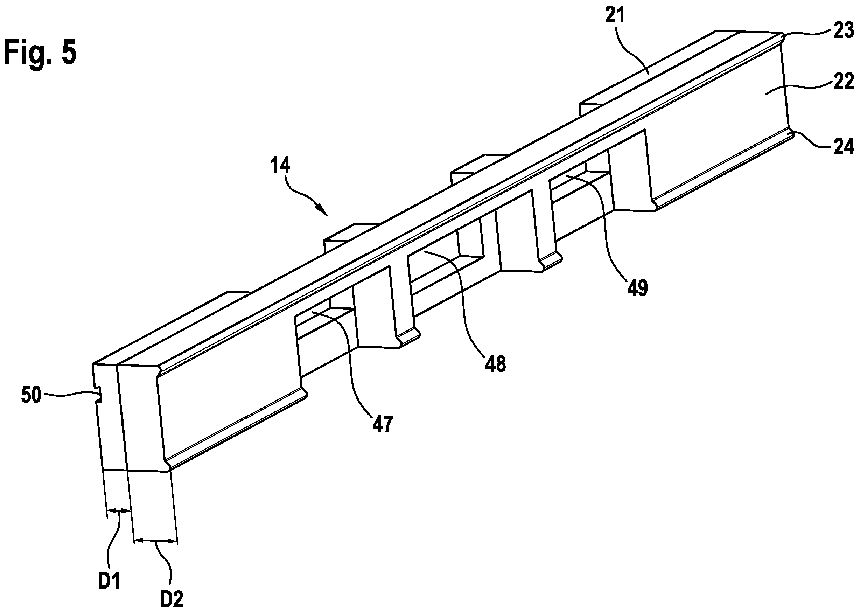

Die Figur 3 zeigt ein erstes Dämmblockteil 21 und die Figur 4 ein zweites Dämmblockteil 22. Werden die beiden Dämmblockteile 21 und 22 zusammengesetzt, so ergibt sich der aus der Figur 5 hervorgehende Dämmblock 14. Die beiden Dämmblockteile 21 und 22 weisen im Wesentlichen eine plattenartige Struktur auf. Ihre Länge L entspricht der Breite des zugehörigen Wohndachfensters 1 bezogen auf seinen Falzbereich 13, der dem oberen Blendrahmenquerholm 7 und dem oberen Flügelrahmenquerholm 9 zugeordnet ist. Die beiden Dämmblockteile 21 und 22 sind von mindestens einem nicht dargestellten Endlosprofil abgelängt. Dies hat den Vorteil, dass von dem Endlosprofil jede beliebige Länge der Dämmblockteile 21 und 22 abgelenkt werden kann, sodass alle Wohndachfenster 1, unabhängig von ihrer Breite, einfach und problemlos beschickt werden können. Das Dämmblockteil 22 der Figur 4 kann Randstege 23, 24 aufweisen. Diese dienen einem verbesserten Dichtschluss zum Flügelrahmen 3.

Das Dämmblockteil 21 weist eine Oberseite 25, eine Unterseite 26, Stirnseiten 27 und 28 sowie Längsseiten 29 und 30 auf. Die Gestalt ist insgesamt flach quaderförmig (dabei bleiben die optionalen Randstege 23 und 24 unberücksichtigt). Das Dämmblockteil 22 weist eine Oberseite 31, eine Unterseite 32, Stirnseiten 33 und 34 sowie Längsseiten 35 und 36 auf. Es besteht insbesondere ebenfalls eine flache quaderförmige Form, wobei die Längen L und die Breiten B beider Dämmblockteile 21 und 22 übereinstimmen. Gemäß Figur 5 weist das Dämmblockteil 21 die Dicke D1 und das Dämmblockteil 22 die Dicke D2 auf. Im vorliegenden Ausführungsbeispiel ist D1 kleiner als D2. Es ist aber auch durchaus denkbar, dass D2 kleiner als D1 ist oder dass beide Dicken D1 und D2 gleich groß sind.

Der Längsseite 29 und der Längsseite 30 ist jeweils ein Längsseitenrand 37 und 38 und der Längsseite 35 und der Längsseite 36 ist jeweils ein Längsseitenrand 39 und 40 zugeordnet.

Gemäß Figur 3 weist das Dämmblockteil 21 drei Ausnehmungen 41, 42 und 43 und das Dämmblockteil 22 ebenfalls drei Ausnehmungen 44, 45 und 46 auf. Die Ausnehmungen 41 bis 43 sind randoffen zum Längsseitenrand 37 ausgebildet. Die Ausnehmungen 44 bis 46 sind randoffen zum Längsseitenrand 40 ausgebildet. Die Ausnehmungen 41 bis 46 durchsetzen jeweils die gesamte Dicke D1 beziehungsweise D2 der Dämmblockteile 21 und 22. Die Ausnehmungen 41 bis 46 haben in dem vorliegenden Ausführungsbeispiel jeweils eine Rechteckform. Diese Formgebung ist jedoch nicht zwingend. Ferner ist auch die Anzahl der Ausnehmungen, die bei dem Ausführungsbeispiel je Dämmblockteil 21 beziehungsweise 22 drei beträgt, nicht zwingend, sondern es können mehr oder weniger Ausnehmungen vorgesehen sein. Die Ausnehmungen 41 bis 46 dienen zur Realisierung der erwähnten Luftführung, wobei im vorliegenden Ausführungsbeispiel die Ausnehmungen 41 und 44 eine Luftführung bilden, die Ausnehmungen 42 und 45 eine weitere Luftführung bilden und die Ausnehmungen 43 und 46 eine wiederum weitere Luftführung bilden, sodass insgesamt drei Luftführungen realisiert werden. Ferner kann die Anordnung derart getroffen sein, dass die Ausnehmungen 42 und 45 einen Freiraum schaffen, um am Blendrahmen 2 eine Schließplatte befestigen zu können, die mit einer Verriegelungseinrichtung des Flügelrahmens 3 zusammenwirkt. Die Schließplatte füllt jedoch die Ausnehmungen 42 und 45 nicht komplett aus, sodass weiterhin eine Luftführung realisiert wird.

Aus den Figuren 3 und 4 ist bei einer Gegenüberstellung erkennbar, dass die Ausnehmungen 41 bis 43 von einem Längsseitenrand 37 ausgehen, der entgegengesetzt liegt zum Längsseitenrand 40 des Dämmblockteils 22. Werden die beiden Dämmblockteile 21 und 22 gemäß des dargestellten "Pluszeichens" zusammengesetzt, derart, dass auf der Oberseite 25 des Dämmblockteils 21 die Unterseite 32 des Dämmblockteils 22 befestigt wird, insbesondere durch Klebung, so ergibt sich der aus der Figur 5 ersichtliche Dämmblock 14. Da die Ausnehmungen 41 bis 43 im zusammengesetzten Zustand des Dämmblocks 14 zumindest bereichsweise in die Ausnehmungen 44 bis 46 des Dämmblockteils 22 übergehen, also jeweils eine lufttechnische Verbindung geschaffen wird, ergibt sich jeweils ein Luftführungsweg 47, 48 und 49. Der zur Figur 2 erwähnte Luftführungsweg 17 kann dabei beispielsweise dem Luftführungsweg 48 entsprechen. Die Längen der Ausnehmungen 41 bis 46 können unterschiedlich groß sein, so wie dies aus den zwischen den Figuren 3 und 4 dargestellten gestrichelten Linien erkennbar ist. Auch ist es denkbar, die Tiefen T der Ausnehmungen 41 bis 46 nicht alle gleich groß zu gestalten.

Da die Ausnehmungen 41 bis 46 alle die jeweilige Dicke D1 beziehungsweise D2 der Dämmblockteile 21 und 22 durchsetzen, ist es beispielsweise besonders einfach, sie durch Stanzung zu erzeugen. Gemäß Figur 5 kann an der Unterseite 32 des Dämmblockteils 22 eine Längsnut 50 ausgebildet sein.

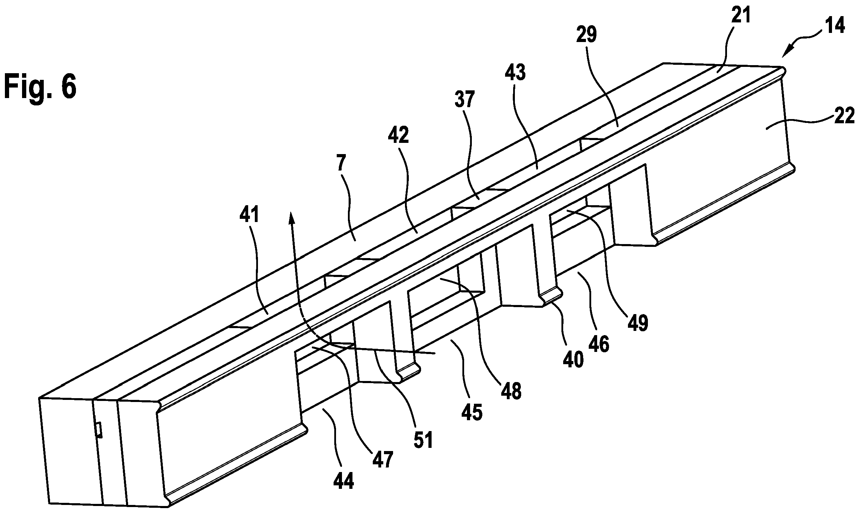

Die Figur 6 zeigt, dass aufgrund der von gegensätzlichen Längsseitenrändern 37 und 40 ausgehenden Ausnehmungen 41 bis 46 jeweils Luftführungswinkelwege geschaffen sind, das heißt, die Luftführungswege 47 bis 49 sind winkelförmig, insbesondere mit einem Winkel von 90°, gestaltet, sodass eine entsprechende Luftumlenkung (Pfeil 51) erfolgt. Wird der Dämmblock 14 am Wohndachfenster 1 befestigt, so ergibt sich die aus der Figur 6 schematisch dargestellte Situation, das heißt die Ausnehmungen 41 bis 43 werden im Bereich der Unterseite 26 durch den dort liegenden Blendrahmenquerholm 7 geschlossen und sind demzufolge nur noch zur Längsseite 29 offen.

Aufgrund der Erfindung wird ein Dämmblock 14 für ein Wohndachfenster 1 geschaffen, der sehr einfach herstellbar ist. Die beiden Dämmblockteile 21 und 22 bestehen bevorzugt aus PE-Schaumstoff. Aufgrund der Erfindung muss nicht ein individuelles, größenabhängiges Spezialformteil hergestellt werden, sondern es können einfache Endlosprofile eingesetzt werden, wobei dennoch mindestens jeweils eine Luftführung pro Dämmblock 14 auf einfache Art und Weise realisiert wird.

## Patentansprüche

1. Dämmblock (14) zur dämmenden Anordnung in einem Falzbereich zwischen einem Blendrahmen und einem Flügelrahmen eines Fensters, einer Tür oder dergleichen, insbesondere eines Wohndachfensters, **dadurch gekennzeichnet, dass** der Dämmblock (14) aus mindestens zwei, jeweils über seine Länge verlaufenden Dämmblockteilen (21,22) zusammengesetzt ist und mindestens einen, durch jeweils mindestens eine Ausnehmung (41,42,43,44,45,46) in jedem der Dämmblockteile (21,22) gebildeten Luftführungsweg (47,48,49) aufweist, und wobei jedes Dämmblockteil (21,22) zwei, einander gegenüberliegende Längsseitenränder (37,38,39,40) aufweist, und die Ausnehmung (41,42,43,44,45,46) des einen Dämmblockteils (21,22) zu einem seiner Längsseitenränder und die Ausnehmung (41,42,43,44,45,46) des anderen Dämmblockteils (21,22) zu demjenigen seiner Längsseitenränder (37,38,39,40) randoffen ist, der entgegengesetzt zum genannten Längsseitenrand (37,38,39,40) des einen Dämmblockteils (21,22) liegt.

2. Dämmblock nach Anspruch 1, **dadurch gekennzeichnet, dass** jedes der Dämmblockteile (21,22) ein von mindestens einem Endlosprofil der Länge nach abgelängtes Dämmblockstück ist.

3. Dämmblock nach einem der vorhergehenden Ansprüche, **dadurch gekennzeichnet, dass** die jeweilige Ausnehmung (41,42,43,44,45,46) die Dicke (D1,D2) jedes Dämmblockteils (21,22) ganz durchsetzt.

4. Dämmblock nach einem der vorhergehenden Ansprüche, **dadurch gekennzeichnet, dass** die Ausnehmungen (41,42,43,44,45,46) der beiden Dämmblockteile (21,22) zumindest teilweise ineinander übergehen.

5. Dämmblock nach einem der vorhergehenden Ansprüche, **dadurch gekennzeichnet, dass** die Dämmblockteile (21,22) jeweils aus Schaumstoff bestehen.

6. Dämmblock nach Anspruch 5, **dadurch gekennzeichnet, dass** die Dämmblockteile (21,22) jeweils aus PE-Schaumstoff bestehen.

7. Dämmblock nach einem der vorhergehenden Ansprüche, **dadurch gekennzeichnet, dass** jede der Ausnehmungen (41,42,43,44,45,46) eine durch Stanzen, Schneiden, Sägen und/oder thermische Austragung gebildete Ausnehmung (41,42,43,44,45,46) ist.

8. Dämmblock nach einem der vorhergehenden Ansprüche, **dadurch gekennzeichnet, dass** jedes Dämmblockteil (21,22) eine Oberseite (25,31) und eine Unterseite(26,32) aufweist und dass auf der Oberseite (25,31) des einen Dämmblockteils (21,22) die Unterseite (26,32) des anderen Dämmblockteils (21,22) befestigt, insbesondere durch Stoffschluss, durch Clipsgeometrie und/oder durch Klebung, befestigt ist.

9. Dämmblock nach einem der vorhergehenden Ansprüche, **dadurch gekennzeichnet, dass** der Luftführungsweg (47,48,49) ein Luftführungswinkelweg ist.

10. Fenster, Tür oder dergleichen, insbesondere Wohndachfenster, mit einem Blendrahmen und einem Flügelrahmen, wobei zwischen dem Blendrahmen und dem Flügelrahmen ein Falzbereich ausgebildet ist, **dadurch gekennzeichnet, dass** im Falzbereich (13) ein Dämmblock (14) nach einem oder mehreren der vorhergehenden Ansprüche angeordnet ist.

## Claims

1. An insulation block (14) for an insulating arrangement in a rebate area between a blind frame and a sash frame of a window, a door or the like, in particular of a residential roof window, **characterised in that** the insulation block (14) is made up of at least two insulation block parts (21, 22), which each extend across its length, and has at least one air guideway (47, 48, 49), which is formed by at least one recess (41, 42, 43, 44, 45, 46) each in each of the insulation block parts (21, 22), and wherein each insulation block part (21, 22) has two longitudinal side edges (37, 38, 39, 40) located opposite one another, and the recess (41, 42, 43, 44, 45, 46) of the one insulation block part (21, 22) is open on the edge to one of its longitudinal side edges and the recess (41, 42, 43, 44, 45, 46) of the other insulation block part (21, 22) is open on the edge to that one of its longitudinal side edges (37, 38, 39, 40), which is located opposite to the mentioned longitudinal side edge (37, 38, 39, 40) of the one insulation block part (21, 22).

2. The insulation block according to claim 1, **characterised in that** each of the insulation block parts (21, 22) is an insulation block piece, which is trimmed off lengthwise from at least one endless profile.

3. The insulation block according to any one of the preceding claims, **characterised in that** the respective recess (41, 42, 43, 44, 45, 46) completely penetrates the thickness (D1, D2) of each insulation block part (21, 22).

4. The insulation block according to any one of the preceding claims, **characterised in that** the recesses (41, 42, 43, 44, 45, 46) of the two insulation block parts (21, 22) at least partially merge into one another.

5. The insulation block according to any one of the preceding claims, **characterised in that** the insulation block parts (21, 22) in each case consist of foam.

6. The insulation block according to claim 5, **characterised in that** the insulation block parts (21, 22) in each case consist of PE foam.

7. The insulation block according to any one of the preceding claims, **characterised in that** each of the recesses (41, 42, 43, 44, 45, 46) is a recess (41, 42, 43, 44, 45, 46) formed by means of die cutting, cutting, sawing and/or thermal removal.

8. The insulation block according to any one of the preceding claims, **characterised in that** each insulation block part (21, 22) has a top side (25, 31) and a bottom side (26, 32) and that the bottom side (26, 32) of the other insulation block part (21, 22) is fastened to the top side (25, 31) of the one insulation block part (21, 22), in particular by means of adhesive bond, by clip geometry and/or glueing.

9. The insulation block according to any one of the preceding claims, **characterised in that** the air guideway (47, 48, 49) is an angular air guideway.

10. A window, door or the like, in particular residential roof window, comprising a blind frame and a sash frame, wherein a rebate area is formed between the blind frame and the sash frame, **characterised in that** an insulation block (14) according to any one or a plurality of the preceding claims is arranged in the rebate area (13).

## Revendications

1. Bloc isolant (14) pour l'agencement isolant dans une région de feuillure entre un châssis dormant et un châssis de battant d'une fenêtre, d'une porte ou similaire, notamment d'une fenêtre de toit d'habitation, **caractérisé en ce que** le bloc isolant (14) est composé d'au moins de deux parties de bloc isolant (21, 22) s'étendant chacune sur sa longueur et présente au moins un trajet de guidage d'air (47, 48, 49) formé dans chacune des parties de bloc isolant (21, 22) par à chaque fois au moins un évidement (41, 42, 43, 44, 45, 46), et dans lequel chaque partie de bloc isolant (21, 22) présente deux bords latéraux longitudinaux (37, 38, 39, 40) opposés l'un à l'autre, et l'évidement (41, 42, 43, 44, 45, 46) d'une des parties de bloc isolant (21, 22) est à bord ouvert vers un de ses bords latéraux longitudinaux et l'évidement (41, 42, 43, 44, 45, 46) de l'autre partie de bloc isolant (21, 22) est à bord ouvert vers celui de ses bords latéraux longitudinaux (37, 38, 39, 40) qui se situe à l'opposé dudit bord latéral longitudinal (37, 38, 39, 40) d'une des parties de bloc isolant (21, 22).

2. Bloc isolant selon la revendication 1, **caractérisé en ce que** chacune des parties de bloc isolant (21, 22) est une pièce de bloc isolant coupée à longueur par au moins un profilé sans fin.

3. Bloc isolant selon une des revendications précédentes, **caractérisé en ce que** l'évidement respectif (41, 42, 43, 44, 45, 46) traverse entièrement l'épaisseur (D1, D2) de chaque partie de bloc isolant (21, 22).

4. Bloc isolant selon une des revendications précédentes, **caractérisé en ce que** les évidements (41, 42, 43, 44, 45, 46) des deux parties de bloc isolant (21, 22) fusionnent au moins partiellement l'un dans l'autre.

5. Bloc isolant selon une des revendications précédentes, **caractérisé en ce que** les parties de bloc isolant (21, 22) se composent chacune de mousse synthétique.

6. Bloc isolant selon la revendication 5, **caractérisé en ce que** les parties de bloc isolant (21, 22) se composent chacune de mousse synthétique de PE.

7. Bloc isolant selon une des revendications précédentes, **caractérisé en ce que** chacun des évidements (41, 42, 43, 44, 45, 46) est un évidement (41, 42, 43, 44, 45, 46) formé par poinçonnage, découpe, sciage et/ou enlèvement thermique.

8. Bloc isolant selon une des revendications précédentes, **caractérisé en ce que** chaque partie de bloc isolant (21, 22) présente un côté supérieur (25, 31) et un côté inférieur (26, 32) et que le côté inférieur (26, 32) de l'autre partie de bloc isolant (21, 22) est fixé sur le côté supérieur (25, 31) d'une des parties de bloc isolant (21, 22), notamment fixé par liaison de matière, par géométrie d'enclipsage et/ou par collage.

9. Bloc isolant selon une des revendications précédentes, **caractérisé en ce que** le trajet de guidage d'air (47, 48, 49) est un trajet angulaire de guidage d'air.

10. Fenêtre, porte ou similaire, notamment fenêtre de toit d'habitation, avec un châssis dormant et un châssis de battant, dans laquelle une région de feuillure est réalisée entre le châssis dormant et le châssis de battant, **caractérisée en ce qu'**un bloc isolant (14) selon une ou plusieurs des revendications précédentes est disposé dans la région de feuillure (13).
